# EUROPÄISCHE PATENTSCHRIFT

(11) **EP 2 668 547 B1**
(45) Veröffentlichungstag und Bekanntmachung des Hinweises auf die Patenterteilung: **18.03.2015**
(21) Anmeldenummer: 12709499.3
(22) Anmeldetag: 27.01.2012
(51) Int. Cl.: G05B 19/18

(54) **VERFAHREN ZUR VERRINGERUNG DER EXZENTRIZITÄT DER INNEN- ZUR AUßENFLÄCHE EINES IN EINER WERKZEUGMASCHINE DREHBAR EINGESPANNTEN HOHLEN WERKSTÜCKS**
METHOD FOR REDUCING THE ECCENTRICITY OF THE INNER AND OUTER SURFACE OF A HOLLOW WORKPIECE ROTATABLY CLAMPED IN A MACHINE TOOL
PROCÉDÉ POUR RÉDUIRE L'EXCENTRICITÉ DE LA SURFACE INTÉRIEURE PAR RAPPORT LA SURFACE EXTÉRIEURE D'UNE PIÈCE CREUSE ROTATIVE SERRÉE DANS UNE MACHINE-OUTIL

(30) Priorität: 28.01.2011 AT 1212011
(43) Veröffentlichungstag der Anmeldung: 04.12.2013
(73) Patentinhaber: WFL Millturn Technologies GmbH & Co. KG, 4030 Linz (AT)
(72) Erfinder: KOLL, Reinhard, A-4040 Linz (AT)
(74) Vertreter: Jell, Friedrich
(86) Internationale Anmeldenummer: PCT/AT2012/050013
(87) Internationale Veröffentlichungsnummer: WO 2012/100278

(56) Entgegenhaltungen:
- CA-C- 1 301 494
- DE-A1- 19 620 516
- US-A- 4 620 463
- US-A- 5 168 609

## Beschreibung

Die Erfindung betrifft ein Verfahren zur Verringerung der Exzentrizität der Innen- zur Außenfläche eines in einer Werkzeugmaschine drehbar eingespannten hohlen Werkstücks, insbesondere einer Hohlwelle, bei dem in einer Aufspannung mehrere von der Kontur der Innenfläche des hohlen Werkstücks abhängige Messdaten, insbesondere mit Hilfe von Ultraschall, aufgenommen werden, unter Verwendung der aufgenommenen Messdaten eine Sollfläche für wenigstens einen Teil der Außenfläche mit einer verringerten Exzentrizität zur Innenfläche berechnet und in einem weiteren Schritt das sich drehende Werkstück an seiner Außenfläche entsprechend der Sollfläche wenigstens teilweise spanend bearbeitet wird.

Um die Unwucht bei hohlen Werkstücken zu vermindern, sind aus dem Stand der Technik Verfahren bekannt, bei denen der Grad an Konzentrizität zwischen Innen- und Außenfläche erhöht werden kann. Dabei ist auch bekannt (DE19958373A1), ein hohles Werkstück drehbar einzuspannen und in dieser Aufspannung mehrere vom Verlauf bzw. von der Kontur der Innenfläche des hohlen Werkstücks abhängige Messdaten aufzunehmen. An Hand diese über eine Ultraschallmessung gewonnenen Koordinaten von Messpunkten wird ein Sollverlauf der Außenfläche bzw. eine Sollaußenfläche berechnet, entsprechend der - und zwar in derselben Aufspannung wie bei der Messung-, die Außenfläche des Werkstücks spanend abgedreht wird. Damit kann der Verlauf der Außenfläche parallel zur Innenfläche ausgebildet bzw. die Exzentrizität der Innen- zur Außenfläche verbessert werden. Nachteilig bei diesem Verfahren ist der vergleichsweise hohe Mess-, Rechen- und Steuerungsaufwand. So ist zunächst eine erhebliche Anzahl an Messdaten aufzunehmen, die auch anschließend verarbeitet werden müssen, um eine präzise Sollaußenfläche des hohlen Werkstücks rechnerisch abbilden zu können. Die Bearbeitung des hohlen Werkstücks erfordert im nächsten Schritt weiters einen vergleichsweisen hohen Steuerungsaufwand, weil das gesamte hohle Werkstück regelnd abgedreht wird. Derartige Verfahren sind daher nicht nur aufwändig, sondern auch langsam, was wiederum einer präzisen spanenden Bearbeitung, insbesondere mit optimalen Schnittdaten bezüglich des verwendeten Werkzeugs, entgegensteht, eine vergleichsweise hohe Oberflächengüte kann so nicht gewährleistet werden. Eine Verminderung der Anzahl an aufgenommenen Messdaten zur Verfahrensbeschleunigung kann jedoch nachteilig zu einem erheblichen Verlust an Genauigkeit in der Bearbeitung des Werkstücks führen, sodass damit auch keine Verbesserungen am Verfahren möglich sind. Außerdem kommt hinzu, dass Bedienungsfehler bei der Auswahl der Anzahl an Messpunkten einen erheblichen Einfluss auf die Qualität des Verfahrensergebnisses haben können. Derartige Verfahren können daher hochwertige Werkstücke nicht zufriedenstellend bearbeiten, da solche Verfahren vergleichsweise fehleranfällig, langsam und bedienungsunfreundlich sind.

Die Erfindung hat sich daher die Aufgabe gestellt, ein Verfahren der eingangs geschilderten Art derart zu verbessern, dass damit nicht nur ein vergleichsweise hoher Grad an Konzentrizität von Innen- und Außenfläche erreichbar ist, sondern dass damit gleichzeitig auch eine präzise spanende Bearbeitung der Außenfläche des Werkstücks möglich wird. Außerdem soll das Verfahren schnell und bedienungsfreundlich sein.

Die Erfindung löst die gestellte Aufgabe dadurch, dass an der Außenfläche des Werkstücks eine Teilfläche entsprechend der berechneten Sollfläche in einer spanenden Bearbeitung erzeugt und das Werkstück unter Verwendung der erzeugten Teilfläche über Spannmittel, insbesondere Spannfutter und/oder Lünette, neu aufgespannt wird, wonach in dieser neuen Aufspannung die restliche Außenfläche des sich drehenden Werkstücks spanend bearbeitet wird, um damit die Exzentrizität der Innen- zur Außenfläche wenigstens teilweise zu verringern.

Wird an der Außenfläche des Werkstücks eine Teilfläche entsprechend der berechneten Sollfläche in einer spanenden Bearbeitung erzeugt und das Werkstück unter Verwendung der erzeugten Teilfläche neu aufgespannt, dann kann mit vergleichsweise einfachen und schnellen Verfahrensschritten das Werkstück für eine präzise Weiterbearbeitung vorbereitet werden. Diese gegenüber der gesamten Außenfläche vergleichsweise geringe Teilfläche kann nämlich vergleichsweise schnell in der Konzentrizität zur Innenfläche des Hohlraums des Werkstücks angepasst werden, so dass ohne besondere Maßnahmen am Werkstück eine Fläche gefertigt werden kann, die sich für eine neue und präzise Aufspannung eignen kann. Vorteilhaft muss die Erstreckung der Teilfläche am Werkstück den Anforderungen der Spannmittel entsprechend berücksichtigt werden. In der neuen Aufspannung können dann mit einfachen Handhabungsschritten diese Spannmittel vorgesehen werden, um damit die Symmetrieachse der Innenfläche besonders genau zur Drehachse der Werkzeugmaschine ausrichten bzw. diese beiden Achsen in genaue Übereinstimmung bringen zu können. Damit kann in dieser neuen Aufspannung auch eine äußerst genaue Drehführung des Werkstücks ermöglicht werden, was eine hervorragende Ausgangsbasis zur Verringerung der Exzentrizität der Innen- zur Außenfläche mit Hilfe einer spanenden Bearbeitung darstellen kann. Zu diesem Zweck muss nun lediglich in dieser neuen Aufspannung die restliche Außenfläche des sich drehenden Werkstücks spanend bearbeitet werden. Eine derartige Aufspannung kann beispielsweise mit Hilfe eines Spannfutters oder einer abstützenden und/oder einspannenden Lünette geschaffen werden. Da während der neuen Aufspannung auch keine Korrektursteuerungen an der Führung des Werkzeugs hinsichtlich einer Verringerung der Exzentrizität der Innen- zur Außenfläche vorgenommen werden müssen, ist das erfindungsgemäße Verfahren auch besonders schnell. Im Gegensatz zum Stand der Technik muss daher auch kein negativer Einfluss auf die Qualität der spanenden Bearbeitung der Außenfläche, beispielsweise im Vorschub und/oder in der Schnittgeschwindigkeit, in Kauf genommen werden, was stets eine präzise spanende Bearbeitung gewährleisten kann, auch wenn damit gleichzeitig die Exzentrizität der Innen- zur Außenfläche verringert wird. Dies im Wesentlichen dadurch, weil das Werkzeug auch mit optimalen Schnittdaten eingesetzt werden kann und von aus dem Stand der Technik bekannten und sich ständig ändernden Führungsparametern des Werkzeugs gegenüber dem unwuchtigen Werkstück unbeeinträchtigt ist. Beispielsweise kann damit höchsten Anforderungen hinsichtlich der Oberflächengüte genügt werden. Weiters kann durch einfache Handhabungsschritte bei der Vorbereitung der neuen Aufspannung ein bedienungsfreundliches Verfahren geschaffen werden.

Der Grad der Konzentrizität von Innen- und Außenfläche kann deutlich verbessert werden, wenn die Teilfläche drehgefräst wird. Durch das Drehfräsen kann nämlich ein spanendes Werkzeug besonders genau gegenüber der Exzentrizität der Außenfläche ausgleichend geführt werden, um damit eine Fläche für eine präzise Neu-Aufspannung zur Verfügung zu stellen. Neben verbesserten Verfahrensergebnissen durch eine verminderte Exzentrizität der Innen- zur Außenfläche kann mit Hilfe des Drehfräsens außerdem der Verfahrensschritt zur Aufbringung der Teilfläche deutlich beschleunigt werden. Das Verfahren kann dadurch nicht nur genauer werden, sondern auch schneller ablaufen. Achsparalleles Drehfräsen hat sich zur Schaffung der Teilfläche besonders ausgezeichnet.

Die Unwucht des hohlen Werkstücks kann noch weiter verringert werden, wenn in der neuen Aufspannung die Außenfläche wenigstens teilweise durch Runddrehen spanend bearbeitet wird. Insbesondere kann sich dabei ein Längsrunddrehen als vorteilhaft herausstellen.

Wird das Werkstück für die neue Aufspannung über die Innenfläche und über die erzeugte Teilfläche neu aufgespannt, kann das Verfahren noch weiter vereinfacht werden, indem eine bereits bestehende Fläche -, nämlich die Innenfläche für die neue Aufspannung - verwendet wird. Außerdem kommt hinzu, dass die Aufspannung über die Innenfläche, die ja eine Referenzfläche zur Formgebung der Außenfläche darstellt, so für die neue Aufspannung herangezogen werden kann, ohne damit einen Genauigkeitsverlust in Kauf nehmen zu müssen. Es kann daher gleichzeitig mit einer Verringerung des Bedienungsaufwands auch eine Erhöhung der Genauigkeit des Verfahrens geschaffen werden.

Hinsichtlich einer weiteren Verminderung des Bedienungsaufwands sowie einer weiteren Erhöhung der Genauigkeit kann sich zudem als vorteilhaft herausstellen, wenn die Innenfläche über insbesondere einen Spanndorn innengespannt und über eine Lünette an seiner erzeugten Teilfläche abgestützt wird.

Wird eine erste Teilfläche beim Spannfutter und eine zweite Teilfläche am gegenüberliegenden Werkstückende, welches in diesem Bereich von insbesondere einer Lünette abgestützt wird, am Werkstück spanend angebracht, kann ermöglicht werden, eine Unwucht langer hohler Werkstücke zu verringern. Die beiden Teilflächen können nämlich aufgrund ihrer vergleichsweise nahen Spannmittel mit höchster Genauigkeit gefertigt werden, sodass ein besonders hoher Grad an Konzentrizität von Teilfläche und Innenfläche ermöglicht werden kann. Über diese besonderen Teilflächen kann auch die gesamte Exzentrizität der Innen- zur gesamten Außenfläche deutlich verbessert werden, wenn das hohle Werkstück für die neue Aufspannung mit einer Teilfläche vom Spannfutter eingespannt und die andere Teilfläche von einer Lünette abgestützt bzw. anschließend weiter bearbeitet wird.

In den Figuren ist beispielsweise das erfindungsgemäße Verfahren näher erläutert.

Es zeigen
- Fig. 1: eine Frontansicht auf ein in einer Werkzeugmaschine eingespanntes hohles Werkstück,
- Fig. 2: eine Bearbeitungsansicht des nach Fig. 1 eingespannten Werkstücks,
- Fig. 3: eine Frontansicht auf das Werkstück nach Fig. 2 in einer neuen Aufspannung,
- Fig. 4: eine abgerissene Frontansicht des nach Fig. 3 eingespannten Werkstücks bei einer Bearbeitung hinsichtlich der Verminderung der Exzentrizität der Innen- zur Außenfläche,
- Fig. 5: eine Schnittansicht auf eine alternative Aufspannung nach Fig. 3.

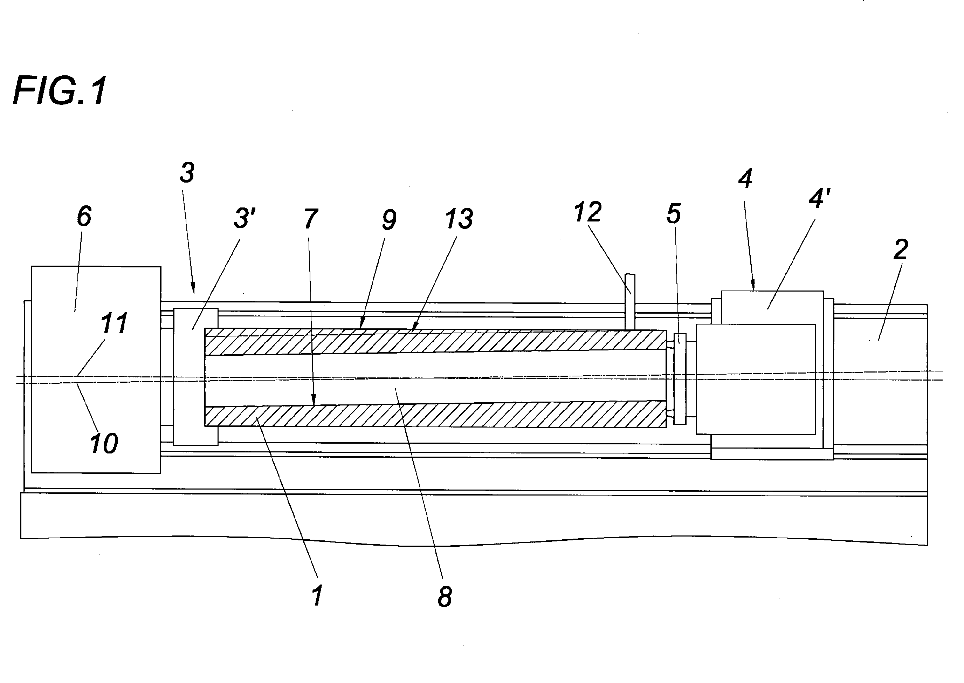

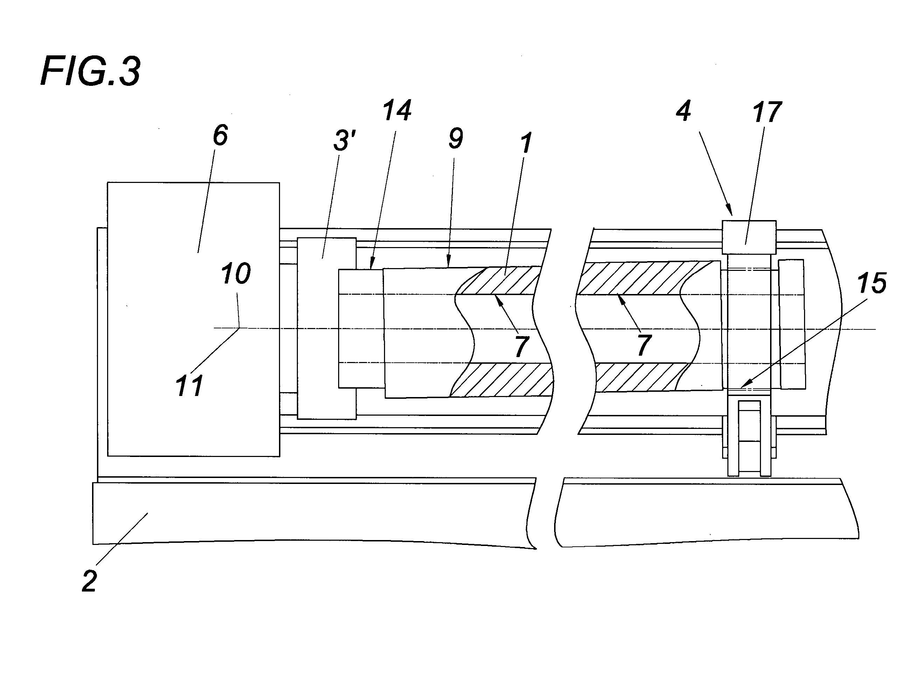

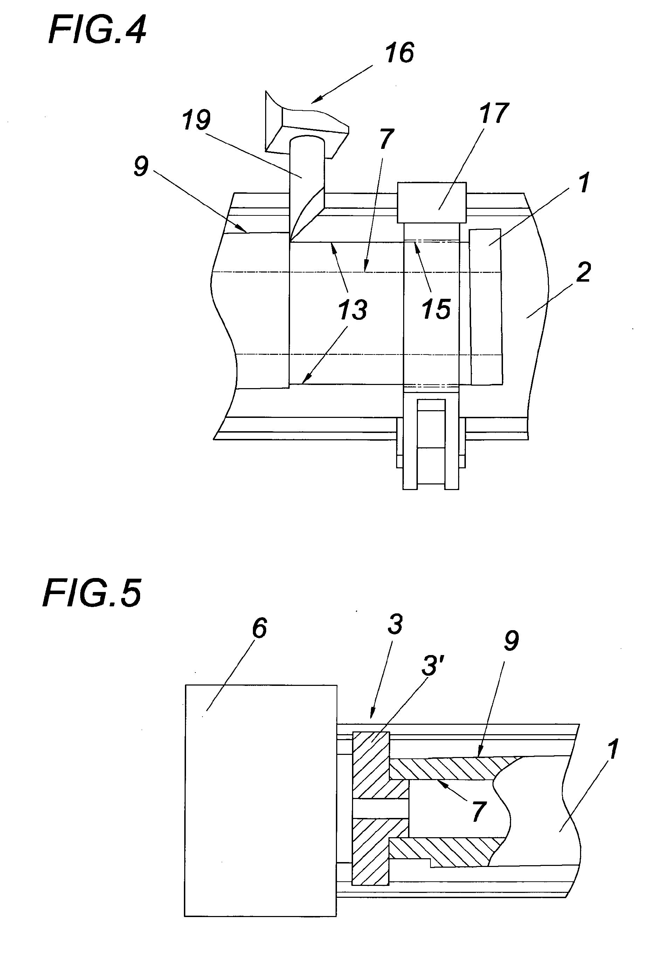

Gemäß den Figuren 1 bis 4 wird beispielsweise das erfindungsgemäße Verfahren näher beschrieben. Gemäß Fig. 1 ist ein hohles Werkstück 1, insbesondere eine Hohlwelle, geschnitten dargestellt, welches Werkstück 1 in einer Werkzeugmaschine 2 aufgespannt ist. Zu diesem Zweck greifen an das Werkstück 1 zwei Spannmittel 3 und 4 an, nämlich auf der einen Seite ein außenspannendes Spannfutter 3' und auf der anderen gegenüberliegenden Seite ein Reitstock 4', der mit Zentrierspitzen 5 die Stirnseite des Werkstücks 1 spannt. Das Spannfutter 3' ist mit einem Spindelantrieb 6 verbunden, um das Werkstück 1 drehbar einspannen zu können. Wie in Fig. 1 erkannt werden kann, besteht zwischen der Innenfläche 7 des Hohlraums 8 und der Außenfläche 9 eine Exzentrizität, wie dies an der Winkelstellung der Symmetrieachse 10 der Innenfläche 7 zur Drehachse 11 der Werkzeugmaschine 2 erkannt werden kann. Um die Exzentrizität der Innen- zur Außenfläche 7 bzw. 9 zu bestimmen, wird die Wandstärke des Werkstücks 1 über ein Ultraschallmessgerät 12 gemessen, und zwar an verschiedenen Stellen in Umfangsrichtung bzw. vorzugsweise auch in Längsrichtung des Werkstücks 1. In dieser Aufspannung werden daher mehrere von der Kontur der Innenfläche 7 des hohlen Werkstücks 1 abhängige Messdaten aufgenommen. Unter Verwendung der aufgenommenen Messdaten wird nun eine Sollfläche 13 für wenigstens einen Teil der Außenfläche 9 mit einer verringerten Exzentrizität zur Innenfläche 7 berechnet. Um ein besonders schnelles und standfestes Verfahren zu ermöglichen, werden an der Außenfläche 9 des Werkstücks 1 lediglich zwei Teilflächen 14, 15 entsprechend der berechneten Sollfläche 13 in einer spanenden Bearbeitung erzeugt. Für die Bearbeitung wird wenigstens ein Werkzeug 16 verwendet. Im Gegensatz zum Stand der Technik wird daher die Außenfläche 9 entsprechend der Sollfläche nicht vollständig spanend bearbeitet, sondern nur teilweise. Die erzeugten Teilflächen 14, 15 werden verwendet, um das Werkstück 1 neu aufzuspannen. Wie in Fig. 3 zu erkennen, ist das Werkstück 1 mit seiner ersten Teilfläche 14 in das Spannfutter 3' eingespannt und an seiner zweiten Teilfläche 15 von einer Lünette 17 als weiterem Spannmittel 4 abgestützt. Es braucht nicht weiter erwähnt werden, dass auch andere Flächen für die neue Aufspannung herangezogen werden können. In dieser neuen Aufspannung kann nun die Symmetrieachse 10 der Innenfläche 7 und der Drehachse 11 der Werkzeugmaschine 2 in gleiche Lage gebracht werden. Ohne besondere weitere Maßnahmen kann nun die restliche Außenfläche 9 des sich drehenden Werkstücks spanend bearbeitet werden, wie dies der Fig. 4 entnommen werden kann. Die Außenfläche 9 kann so entsprechend der Sollfläche 13 fertiggestellt werden, ohne dass die Sollfläche 13 für die gesamte Außenfläche 9 berechnet werden muss. Daher bedarf es auch für das Werkzeug 16 keines hohen Steuerungsaufwands, was das Verfahren vereinfacht. Die Exzentrizität der Innen- zur Außenfläche 7 zu 9 kann somit schnell verringert werden. Im Gegensatz zum Stand der Technik erlaubt das Verfahren eine hohe Bearbeitungsgeschwindigkeit, so dass auch eine vergleichsweise hohe Oberflächengüte erreichbar ist.

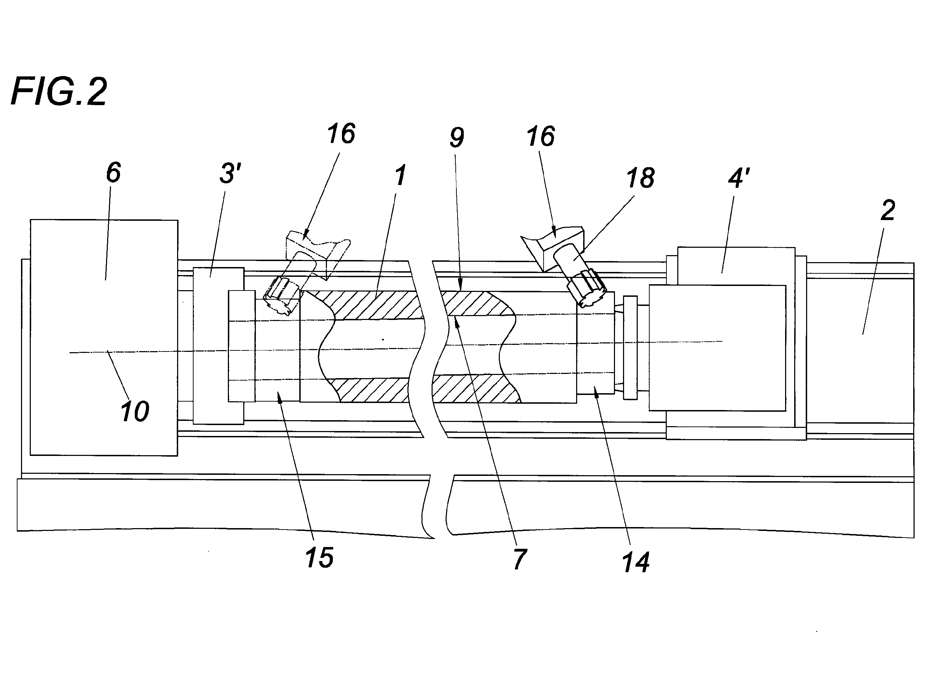

Die Teilflächen 14 und 15 nach Fig. 2 werden mit einem als Fräser 18 ausgeführten Werkzeug 16 drehgefräst, wobei vorzugsweise ein achsparalleles Drehfräsen durchgeführt wird, was zur entsprechenden Innenfläche 7 besonders konzentrische Teilflächen 14 und 14 erzeugen kann.

Gemäß der Fig. 4 wird in der neuen Aufspannung die Außenfläche 9 durch Runddrehen mit einem Drehmeißel 19 spanend bearbeitet. Insbesondere wird für genaue Verfahrensergebnisse ein Längsrunddrehen verwendet.

Gemäß Fig. 5 wird gezeigt, dass auch eine andere Fläche als die Teilflächen 14, 15 am Werkstück 1 für die neue Aufspannung herangezogen werden kann. Es kann nämlich auch die Innenfläche 7 hierzu verwendet werden, um mit Hilfe der oder den Teilflächen 14 und 15 das Werkstück 1 präzise neu aufzuspannen. Dies kann beispielsweise über einen nicht näher dargestellten Spanndorn oder auch über Stufenbacken des Spannfutters 3 erfolgen. Die zweite Abstützung bzw. das zweite Lager kann eine gemäß Fig. 5 nicht näher dargestellte Lünette bilden, die an eine der gefertigten Teilflächen 14 bzw. 15 angreift.

Es muss nicht weiter erwähnt werden, dass die Teilflächen 14, 15 beispielsweise angeführt werden. Je nach Bedarf kann eine Teilflächen oder können mehrere Teilflächen am Werkstück 1 vorgesehen werden, wobei jede Position am Werkstück 1 denkbar ist.

## Patentansprüche

1. Verfahren zur Verringerung der Exzentrizität der Innen- zur Außenfläche (7, 9) eines in einer Werkzeugmaschine (2) drehbar eingespannten hohlen Werkstücks (1), insbesondere einer Hohlwelle, bei dem in einer Aufspannung mehrere von der Kontur der Innenfläche (7) des hohlen Werkstücks (1) abhängige Messdaten, insbesondere mit Hilfe von Ultraschall, aufgenommen werden, unter Verwendung der aufgenommenen Messdaten eine Sollfläche (13) für wenigstens einen Teil der Außenfläche (9) mit einer verringerten Exzentrizität zur Innenfläche (7) berechnet und in einem weiteren Schritt das sich drehende Werkstück (1) an seiner Außenfläche (9) entsprechend der Sollfläche (13) wenigstens teilweise spanend bearbeitet wird, **dadurch gekennzeichnet, dass** an der Außenfläche (9) des Werkstücks (1) eine Teilfläche (14, 15) entsprechend der berechneten Sollfläche (13) in einer spanenden Bearbeitung erzeugt und das Werkstück (1) unter Verwendung der erzeugten Teilfläche (14, 15) über Spannmittel (3, 4), insbesondere Spannfutter (3') und/oder Lünette (17), neu aufgespannt wird, wonach in dieser neuen Aufspannung die restliche Außenfläche (9) des sich drehenden Werkstücks (1) spanend bearbeitet wird, um damit die Exzentrizität der Innen- zur Außenfläche (7, 9) wenigstens teilweise zu verringern.

2. Verfahren nach Anspruch 1, **dadurch gekennzeichnet, dass** die Teilfläche (14, 15) insbesondere achsparallel drehgefräst wird.

3. Verfahren nach Anspruch 1 oder 2, **dadurch gekennzeichnet, dass** in der neuen Aufspannung die Außenfläche (9) wenigstens teilweise durch Runddrehen, insbesondere durch Längsrunddrehen, spanend bearbeitet wird.

4. Verfahren nach Anspruch 1, 2 oder 3, **dadurch gekennzeichnet, dass** für die neue Aufspannung das hohle Werkstück (1) über seine Innenfläche (7) und über die erzeugte Teilfläche (14 oder 15) neu aufgespannt wird.

5. Verfahren nach Anspruch 4, **dadurch gekennzeichnet, dass** die Innenfläche (7) über insbesondere einen Spanndorn innengespannt und über eine Lünette (17) an seiner erzeugten Teilfläche (14 oder 15) abgestützt wird.

6. Verfahren nach einem der Ansprüche 1 bis 5, **dadurch gekennzeichnet, dass** eine erste Teilfläche (15) beim Spannfutter der Aufspannung und eine zweite Teilfläche (14) am gegenüberliegenden Werkstückende, welches in diesem Bereich von insbesondere einer Lünette (17) abgestützt wird, am Werkstück (1) spanend angebracht wird, wonach das hohle Werkstück (1) für die neue Aufspannung wenigstens mit seiner zweiten Teilfläche (14) vom Spannfutter (3) eingespannt und mit seiner ersten Teilfläche (15) von einer Lünette (17) abgestützt wird.

## Claims

1. A method for reducing the eccentricity of the inner surface with respect to the outer surface (7, 9) of a hollow workpiece (1), more particularly a hollow shaft, rotatably clamped in a machine tool (2), in which in one clamping a plurality of measurement data depending on the contour of the inner surface (7) of the hollow workpiece (1) are recorded, more particularly with the aid of ultrasound, a desired surface (13) is calculated by using the recorded measurement data for at least a part of the outer surface (9) with a reduced eccentricity with respect to the inner surface (7), and in a further step the rotating workpiece (1) is at least partially machined at its outer surface (9) thereof according to the desired surface (13), **characterized in that** a sub-surface (14, 15) is produced on the outer surface (9) of the workpiece (1) by machining according to the calculated desired surface (13), and the workpiece (1) is clamped anew by using the produced sub-surface (14, 15) via clamping means (3, 4), more particularly a clamping chuck (3') and/or steady rest (17), whereupon in said new clamping the remaining outer surface (9) of the rotating workpiece (1) is machined in order to thus at least partially reduce the eccentricity of the inner surface (7) with respect to the outer surface (9).

2. A method according to claim 1, **characterized in that** the sub-surface (14, 15) is turn-milled especially parallel to the axis.

3. A method according to claim 1 or 2, **characterized in that** in the new clamping the outer surface (9) is machined at least partly by circular turning, especially by longitudinal circular turning.

4. A method according to claim 1, 2 or 3, **characterized in that** for the new clamping the hollow workpiece (1) is clamped anew via its inner surface (7) and via the produced sub-surface (14 or 15).

5. A method according to claim 4, **characterized in that** the inner surface (7) is internally clamped especially via a mandrel and is supported via a steady rest (17) on its produced sub-surface (14 or 15).

6. A method according to one of the claims 1 to 5, **characterized in that** a first sub-surface (15) is attached by machining to the workpiece (1) at the chuck of the clamp and a second sub-surface (14) at the opposite end of the workpiece, which is supported in this region by a steady rest (17) more particularly, whereupon the hollow workpiece (1) is clamped for the new clamping by the chuck (3) at least with its second sub-surface (14) and is supported with its first sub-surface (15) by a steady rest (17).

## Revendications

1. Procédé pour réduire l'excentricité entre les surfaces intérieure et extérieure (7, 9) d'une pièce d'oeuvre creuse (1) serrée avec possibilité de rotation dans une machine-outil (2), en particulier d'un arbre creux, dans lequel plusieurs données de mesures dépendant du contour de la surface intérieure (7) de la pièce creuse (1) sont relevées pendant un serrage, en particulier à l'aide d'ultrasons, une surface de référence (13) pour au moins une partie de la surface extérieure (9) ayant une excentricité réduite par rapport à la surface intérieure (7) est calculée en utilisant les données de mesure acquises et la pièce (1) en rotation est usinée au moins partiellement sur sa surface extérieure (9) par enlèvement de matière dans une étape suivante suivant la surface de référence (13), **caractérisé en ce qu'**une surface partielle (14, 15) correspondant à la surface de référence calculée (13) est créée sur la surface extérieure (9) de la pièce (1) par usinage par enlèvement de matière et la pièce (1) est à nouveau serrée en utilisant la surface partielle (14, 15) créée à l'aide de moyens de serrage (3, 4), en particulier d'un mandrin de serrage (3') et/ou d'une lunette (17), après quoi, dans ce nouveau serrage, la surface extérieure (9) restante de la pièce (1) en rotation est usinée par enlèvement de matière afin de réduire au moins partiellement l'excentricité de la surface intérieure par rapport à la surface extérieure (7, 9).

2. Procédé selon la revendication 1, **caractérisé en ce que** la surface partielle (14, 15) est en particulier fraisée en rotation à l'axe.

3. Procédé selon la revendication 1 ou 2, **caractérisé en ce que** dans le nouveau serrage, la surface extérieure (9) est usinée partiellement par enlèvement de matière par tournage en rond, en particulier par chariotage.

4. Procédé selon la revendication 1, 2 ou 3, **caractérisé en ce que** pour le nouveau serrage, la pièce creuse (1) est à nouveau serrée sur sa surface intérieure (7) et sur la surface partielle (14 ou 15) créée.

5. Procédé selon la revendication 4, **caractérisé en ce que** la surface intérieure (7) est serrée par l'intérieur, en particulier sur un mandrin de serrage, et soutenue par une lunette (17) sur sa surface partielle (14 ou 15) créée.

6. Procédé selon l'une des revendications 1 à 5, **caractérisé en ce qu'**une première surface partielle (15) sur le mandrin de serrage du serrage et une deuxième surface partielle (14) à l'extrémité opposée de la pièce d'oeuvre, qui est soutenue dans cette zone, en particulier par une lunette (17), sont formées par enlèvement de matière sur la pièce (1), après quoi la pièce creuse (1) est serrée en vue du nouveau serrage au moins par le mandrin de serrage (3) sur sa deuxième surface partielle (14) et par une lunette (17) sur sa première surface partielle (15).
